# FASCICULE DE BREVET EUROPEEN

(11) **EP 2 607 187 B1**
(45) Date de publication et mention de la délivrance du brevet: **07.11.2018**
(21) Numéro de dépôt: 12196256.7
(22) Date de dépôt: 10.12.2012
(51) Int. Cl.: B60S 1/38

(54) **Interface hydraulique d'un dispositif d'essuyage d'une vitre d'un véhicule automobile**
Hydraulische Schnittstelle einer Reinigungsvorrichtung eines Fensters eines Kraftfahrzeugs
Hydraulic interface of a device for wiping a glass pane of a motor vehicle

(30) Priorité: 19.12.2011 FR 1161941
(43) Date de publication de la demande: 26.06.2013
(73) Titulaire: Valeo Systèmes d'Essuyage, 78322 Le Mesnil Saint Denis (FR)
(72) Inventeur: Caillot, Gérald, 78720 CERNAY LA VILLE (FR); Izabel, Vincent, 91380 CHILLY MAZARIN (FR); Jarasson, Jean-Michel, 78321 LE MESNIL SAINT DENIS (FR)
(74) Mandataire: Callu-Danseux, Violaine

(56) Documents cités:
- EP-A1- 2 368 776
- DE-A1-102010 007 557

## Description

La présente invention concerne le domaine technique des dispositifs d'essuyage de vitre pour un véhicule automobile.

On sait qu'un véhicule automobile est couramment équipé d'un dispositif d'essuyage pour assurer un essuyage d'une vitre, par exemple, de son pare-brise et éviter ainsi que la vision qu'a le conducteur de son environnement soit troublée.

Un tel dispositif d'essuyage comprend au moins une bielle ou barre, agencée pour être montée sur le véhicule et pour être entraînée par un système d'actionnement du véhicule, et un bras mobile, agencé pour effectuer un mouvement de va-et-vient angulaire. Le bras mobile est porteur d'un balai d'essuyage, ce dernier comportant une lame racleuse réalisée en une matière élastique, qui frotte contre le pare-brise et évacue l'eau en l'amenant en dehors du champ de vision du conducteur. Le bras mobile est rattaché au balai d'essuyage par un connecteur mécanique et un adaptateur. Le connecteur est une pièce qui est fixée sur la structure du bras mobile, tandis que l'adaptateur est une pièce intermédiaire qui permet la fixation du connecteur sur le balai d'essuyage. Ces deux pièces sont reliées l'une à l'autre par un axe transversal qui autorise leur rotation relative.

Afin d'acheminer un liquide de lavage sur le pare-brise du véhicule, on connaît un dispositif d'essuyage comprenant un tuyau d'alimentation en liquide de lavage acheminé depuis un réservoir situé dans le véhicule et projeté en direction du pare-brise par une rampe de projection située sur le balai d'essuyage. Un tel tuyau est raccordé, d'une part, à un dispositif de distribution de liquide de lavage, situé dans le véhicule, et, d'autre part, au connecteur du dispositif d'essuyage. Le tuyau d'alimentation et le connecteur comprennent un conduit d'alimentation en liquide de lavage.

Une jonction entre le tuyau et le connecteur est réalisée par une interface hydraulique relié d'un côté au tuyau et de l'autre au connecteur.

Par ailleurs, on connaît un dispositif d'essuyage comprenant des moyens de chauffage du liquide de lavage lorsque la température du liquide de lavage est trop basse, par exemple en-dessous de 5°C, se présentant sous la forme d'un fil chauffant voisin du tuyau d'alimentation.

Le document EP 2 368 776 A montre une interface hydraulique selon le préambule de la première revendication.

Cependant, dans un tel dispositif, le connecteur et l'interface hydraulique ne sont pas chauffés car ceux-ci sont éloignés du moyen de chauffage évoqué ci-dessus. Le connecteur et l'interface hydraulique sont ainsi susceptibles de former une zone froide, où le liquide gèle. Cette situation est gênante car ce gel, en des endroits discrets et difficiles d'accès du dispositif d'essuyage, peut rendre la fonction de lavage totalement indisponible. Ceci représente un inconvénient majeur.

L'invention a pour but de résoudre au moins en partie cet inconvénient principalement en réalisant l'interface hydraulique située entre le tuyau et le connecteur dans deux matériaux distincts dont l'un est métallique pour conduire la chaleur, de manière à transporter les calories du moyen de chauffage vers l'endroit discret et difficile d'accès, alors que l'autre matériau est un plastique, autrement appelé polymère, avec lequel est fabriqué une portion de fixation de l'interface hydraulique.

L'invention a ainsi pour objet une interface hydraulique apte à être installée entre un tuyau d'alimentation en liquide et un connecteur d'un dispositif d'essuyage d'une vitre d'un véhicule, comprenant une première portion apte à canaliser le liquide et une deuxième portion apte à solidariser l'interface hydraulique sur le connecteur, innovante en ce que la première portion est réalisée en un matériau métallique alors que la deuxième portion est réalisée en un matériau plastique.

La première portion, métallique, est ainsi fortement conductrice de chaleur. Ainsi, lorsqu'on soumet cette portion a une énergie thermique, celle-ci est facilement transmise au liquide canalisé.

Il est en outre aisé de fabriquer la première portion et la seconde portion indépendamment l'une de l'autre puis de les assembler. Il est notamment aisé de fabriquer d'une part la portion métallique, par exemple, sous forme de tube, puis de monter la deuxième portion de solidarisation, par exemple, sur le tube.

Selon une caractéristique de l'invention, la portion métallique de l'interface hydraulique est réalisée en alliage d'aluminium, matériau léger et facilement malléable.

De manière alternative, la première portion est réalisée est en acier inoxydable, ce qui garantit une absence de corrosion sur la durée de vie de l'interface hydraulique.

Avantageusement, la portion métallique de l'interface hydraulique se présente sous la forme d'un moyen de raccordement hydraulique.

Un tel moyen de raccordement comprend avantageusement un coude pour un montage plus aisé entre le connecteur et le tuyau d'alimentation, et pour gérer une différence d'orientations entre un axe d'entrée dans le connecteur de l'interface et une direction dans laquelle s'étend le tuyau d'alimentation.

Selon un aspect de l'invention, le moyen de raccordement comprend un unique tube délimitant un unique conduit. Il peut également s'agir d'un unique conduit réalisé par une pluralité de tubes emmanchés les uns dans les autres.

Selon une variante, le moyen de raccordement comprend deux tubes définissant chacun un conduit d'acheminement du liquide de lavage, unitaire entre une première extrémité du moyen de raccordement et une deuxième extrémité du moyen de raccordement. On comprend ici que les tubes sont chacun une seule et unique pièce qui s'étend entre le tuyau d'alimentation et le connecteur du dispositif d'essuyage.

Selon une autre variante, le moyen de raccordement comprend quatre tubes emmanchés deux à deux au niveau de la deuxième portion et définissant deux à deux un conduit d'acheminement du liquide de lavage.

Selon une caractéristique de l'invention, l'interface hydraulique comprend en outre une patte de liaison entre deux tubes de manière à empêcher une rotation d'un tube par rapport à l'autre, notamment quand les conduits d'acheminement comprennent un coude. Une telle patte de liaison est avantageusement localisée entre une extrémité apte à recevoir le tuyau d'alimentation et la deuxième portion.

Selon une caractéristique de l'invention, le matériau plastique de la deuxième portion est un matériau polymérique synthétique.

Selon un aspect de l'invention, la première portion comprend des moyens de blocage en translation de la première portion vis-à-vis de la deuxième portion, ces moyens de blocage peuvent se présenter sous la forme d'une déformation. Une telle déformation peut se présenter, par exemple, sous la forme d'une protubérance, d'une nervure ou d'une rainure, agencée pour bloquer la première portion en translation vis-à-vis de la deuxième portion.

Selon un aspect de l'invention, au moins un tube comprend une nervure.

Selon un autre aspect de l'invention, au moins un tube comprend une bague.

Selon un autre aspect de l'invention, la deuxième portion comprend au moins une gorge agencée pour recevoir la bague.

Selon un autre aspect de l'invention, au moins un tube comprend au moins une rainure.

Selon un autre aspect de l'invention, la deuxième portion comprend au moins une languette agencée pour se loger dans la rainure.

Selon une caractéristique de l'invention, la deuxième portion peut en outre comprendre un connecteur électrique agencé pour être disposé dans un logement du connecteur.

Selon un aspect de l'invention, l'interface hydraulique comprend en outre au moins une canule, agencée pour être montée, par l'une de ses extrémités, sur la portion métallique de l'interface hydraulique.

L'invention concerne aussi un dispositif d'essuyage de vitre pour un véhicule automobile comprenant au moins un bras mobile agencé pour être monté sur le véhicule et effectuer un mouvement de va-et-vient angulaire, un connecteur monté sur ledit bras mobile, une interface hydraulique telle que définie ci-dessus, un tuyau d'alimentation en liquide de lavage monté sur ledit connecteur par ladite interface hydraulique, et au moins un fil chauffant, dispositif caractérisé en ce que le fil chauffant est monté sur la portion métallique de l'interface hydraulique de sorte à autoriser une transmission de chaleur du fil au liquide de lavage canalisé dans la portion métallique. Le fil chauffant peut ainsi être monté directement sur la portion métallique de l'interface hydraulique sans endommager celle-ci. Une telle portion métallique est un bon conducteur thermique, ce qui permet une bonne conduction de la chaleur du fil chauffant vers le liquide de lavage.

Selon un aspect de l'invention, la deuxième portion est issue de matière d'un connecteur électrique, destiné à se loger dans le connecteur du dispositif d'essuyage. Le connecteur électrique peut être réalisé en un matériau plastique, tel que, par exemple, un matériau polymérique synthétique.

Selon une caractéristique de l'invention, la portion métallique comprend une pluralité de tubes et l'interface hydraulique comprend en outre une patte de liaison solidarisée entre au moins deux tubes, le fil chauffant étant monté, par exemple par enroulement, sur la première portion, et éventuellement sur ladite patte de liaison. Une telle patte de liaison constitue ainsi un pont entre la pluralité de tubes de raccordement permettant de bloquer la position relative des tubes.

Selon un aspect de l'invention, l'interface hydraulique comprend en outre au moins une canule, agencée pour être montée, par l'une de ses extrémités, sur la portion métallique de l'interface hydraulique et, par son autre extrémité, dans le tuyau d'alimentation.

D'autres caractéristiques et avantages de l'invention apparaîtront lors de la description qui suit faite en regard des figures annexées données à titre d'exemples non limitatifs et dans lesquelles des références identiques sont données à des objets semblables.
La figure 1 est une vue partielle d'un dispositif d'essuyage selon l'invention.
La figure 2 est une vue en perspective d'une interface hydraulique selon une première forme de réalisation de l'invention.
La figure 3 est une vue éclatée en perspective d'une interface hydraulique selon une première forme de réalisation de l'invention.
La figure 4 est une vue en perspective et en coupe partielle d'une interface hydraulique selon une première forme de réalisation de l'invention.
La figure 5 est une vue en perspective d'une interface hydraulique selon une seconde forme de réalisation de l'invention.
La figure 6 est une vue éclatée en perspective d'une interface hydraulique selon une seconde forme de réalisation de l'invention.
La figure 7 est une vue en perspective et en coupe partielle d'une interface hydraulique selon une seconde forme de réalisation de l'invention.
La figure 8 est une vue en perspective d'une interface hydraulique selon une troisième forme de réalisation de l'invention.
La figure 9 est une vue éclatée en perspective d'une interface hydraulique selon une troisième forme de réalisation de l'invention.
La figure 10 est une vue en perspective d'une interface hydraulique selon une quatrième forme de réalisation de l'invention.
La figure 11 est une vue en perspective de la deuxième portion d'une interface hydraulique selon une quatrième forme de réalisation de l'invention.
La figure 12 est une vue en coupe d'une interface hydraulique selon une quatrième forme de réalisation de l'invention.

L'interface hydraulique selon l'invention est apte à être installée entre un tuyau d'alimentation en liquide de lavage et un connecteur d'un dispositif d'essuyage d'une vitre d'un véhicule.

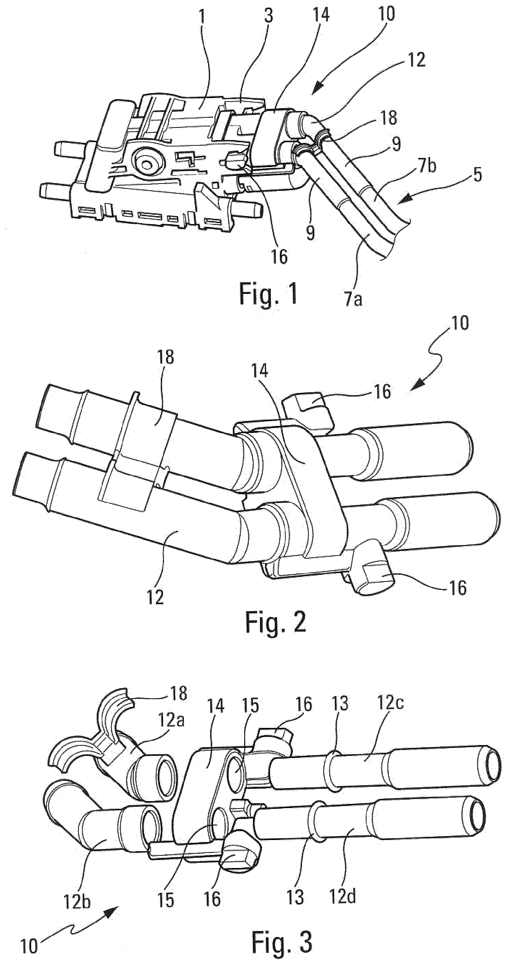

On a représenté partiellement à la figure 1 un dispositif d'essuyage de vitre pour un véhicule automobile et plus particulièrement un connecteur 1, un tuyau d'alimentation 5 en liquide de lavage et une interface hydraulique 10 d'un tel dispositif d'essuyage.

L'interface hydraulique 10 est montée, d'une part, sur le tuyau d'alimentation 5, qui comprend ici deux tuyaux 7a et 7b définissant chacun un conduit d'acheminement du liquide de lavage, notamment par deux canules 9, et, d'autre part, sur le connecteur 1.

L'interface hydraulique 10 comprend une première portion 12 métallique, ci-après appelé portion métallique, apte à canaliser le liquide de lavage et une deuxième portion 14, en matière plastique, apte à solidariser l'interface hydraulique 10 sur le connecteur 1. La première portion 12 peut être formée par un unique ou une pluralité de conduits d'acheminement du liquide, chaque conduit d'acheminement peut être formé par un tube unitaire d'un bout à l'autre de l'interface hydraulique ou par plusieurs tubes agencés pour s'emboîter l'un dans l'autre. Une telle structure forme un moyen de raccordement hydraulique.

De manière préférentielle, la portion métallique 12 se présente ici par exemple sous la forme d'un couple de conduits. Une telle portion 12, par sa nature métallique, permet de transmettre efficacement de l'énergie thermique au liquide canalisé. Ainsi, par exemple, un ou plusieurs fils chauffants peuvent être montés sur la portion métallique 12 de sorte à autoriser une transmission de chaleur du fil au liquide de lavage canalisé par la portion métallique 12. La portion métallique de l'interface hydraulique peut être réalisée, par exemple, en alliage aluminium, matériau léger et facilement malléable, en cuivre, en acier inoxydable ou tout autre matériau métallique apte à conduire des calories.

La deuxième portion 14 comprend des ailettes 16, autrement appelées godrons, agencées pour solidariser la deuxième portion 14 avec le connecteur 1. A cet effet, le connecteur 1 comprend des moyens de réception des ailettes 16 se présentant ici sous la forme de branches 3 en forme de U agencées pour recevoir et maintenir les ailettes 16 lorsque le connecteur 1 et l'interface hydraulique 10 sont solidarisées.

Dans une forme de réalisation de l'invention, la deuxième portion 14 est issue de matière avec un connecteur électrique. Dans ce cas, les ailettes 16 et les branches 3 sont liées au connecteur électrique et la première portion métallique 12 peut alors être montée, notamment enfilée, dans la deuxième portion 14.

Comme illustré par les figures 1 à 10, l'interface hydraulique 10 comprend en outre une patte de liaison 18. Une telle patte de liaison 18 peut être métallique ou plastique, et être montée, par exemple par coopération de forme ou par soudage, entre les tubes distincts formant la portion métallique 12. Un ou plusieurs fils chauffants peuvent montés, par exemple par enroulement, sur la première portion métallique 12 et, avantageusement sur ladite patte de liaison 18, de sorte à constituer un pont mécanique, et avantageusement thermique lorsque ladite patte de liaison est métallique, entre les conduits de la première portion métallique 12 pour une conduction efficace de la chaleur.

On a représenté aux figures 2 à 12 quatre formes de réalisation de l'interface hydraulique 10 selon l'invention.

Dans les quatre formes de réalisation illustrées par les figures 2 à 12, la première portion métallique 12 comprend deux ou quatre tubes définissant deux conduits d'acheminement du liquide de lavage. Les deux conduits comportent chacun un coude permettant le montage de l'interface hydraulique 10 entre le connecteur 1 et le tuyau d'alimentation 5. La deuxième portion 14 se présente ici sous forme d'une structure sensiblement parallélépipédique, en une ou deux parties, comprenant deux orifices 15 dont chacun est agencé pour recevoir un tube de la première portion 12. L'interface hydraulique 10 comprend en outre une patte de liaison 18 agencée pour solidariser les deux conduits et, optionnellement, pour recevoir un ou plusieurs fils chauffants, non représentés.

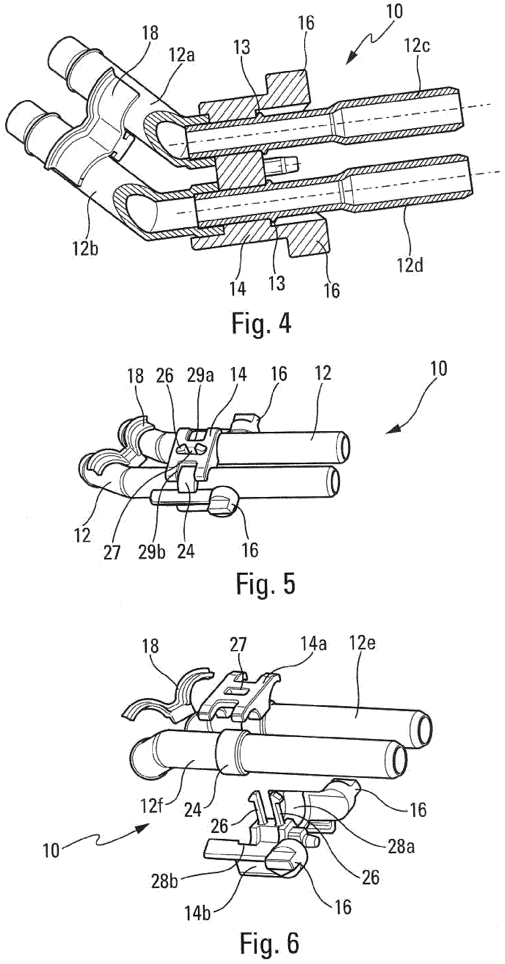

Dans une première forme de réalisation illustrée par les figures 2 à 4, la portion métallique 12 comprend quatre tubes 12a, 12b ,12c, 12d. Les tubes 12a et 12b comprennent chacun un coude et sont agencés chacun pour, à l'une de leurs extrémités, recevoir les embouts des tuyaux respectivement du tuyau d'alimentation 5, et à l'autre de leurs extrémités, recevoir les tubes respectivement 12c et 12d. Les tubes 12a et 12c sont agencés pour s'emboiter l'un dans l'autre et former une première conduite. Les tubes 12b et 12d sont également agencés pour s'emboiter l'un dans l'autre et former une deuxième conduite. Les tubes 12c et 12d comprennent chacun une nervure 13 et sont montés, par coulissement, dans chacun des orifices 15 de la deuxième portion 14 jusqu'à une position finale dans laquelle les nervures 13 des tubes 12c et 12d sont en contact avec la deuxième portion 14, comme illustré par la figure 4. Les nervures 13 permettent notamment de bloquer en translation la première portion 12 et la deuxième portion 14.

Dans une seconde forme de réalisation illustrée par les figures 5 à 7, la portion métallique 12 comprend exclusivement deux tubes 12e et 12f comprenant chacun une bague 24. Le diamètre extérieur de la bague 24 est supérieur au diamètre du tube qui porte cette bague 24. La deuxième portion 14 comprend ici deux parties ou éléments 14a et 14b complémentaires agencés pour se fixer l'un sur l'autre et comprenant chacun des gorges, respectivement 28a, 29a et 28b, 29b, agencées pour recevoir les bagues 24. Pour permettre leur fixation l'un sur l'autre, le deuxième élément 14b comprend deux tiges de blocage 26 agencées pour s'emboiter dans un logement 27 du premier élément 14a. Ainsi, lors du montage de la deuxième portion 14 sur les tubes 12e et 12f de la portion métallique, les gorges, respectivement 28a, 29a et 28b, 29b, reçoivent les bagues 24 et les tiges de blocage 26 s'insère dans le logement 27 pour maintenir solidaires les deux éléments 14a et 14b autour des tubes 12e et 12f, comme illustré par la figure 5. Les bagues 24 et les tiges de blocage 26 permettent notamment de bloquer en translation la première portion 12 vis-à-vis de la deuxième portion 14. On comprend ainsi que la première portion métallique 12 est interposée, c'est-à-dire, prise en sandwich, entre le premier élément 14a et le deuxième élément 14b.

Une patte de liaison 18 peut avantageusement être prévue entre les deux tubes, de manière à garantir une bonne orientation des deux tubes, formant ainsi un système d'anti-rotation à l'égard de ces tubes.

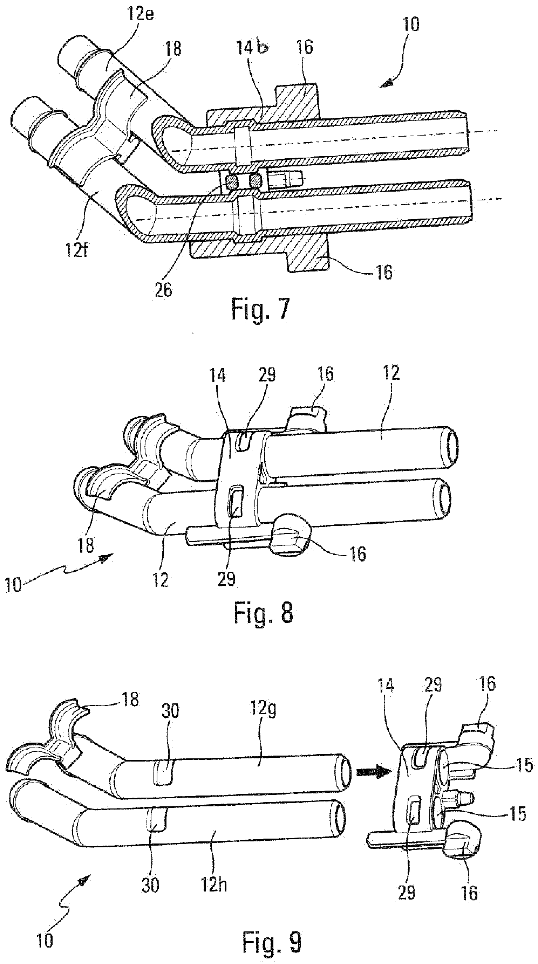

Dans une troisième forme de réalisation illustrée par les figures 8 et 9, la portion métallique 12 comprend deux tubes 12g et 12h comprenant chacun une rainure 30. La deuxième portion 14 comprend ici un unique élément comportant deux languettes 29 agencées pour s'insérer dans les rainures 30, un tel agencement résultant d'une déformation, par exemple à chaud, de la face supérieure délimitant la deuxième portion 14. Ces rainures 30 sont issues de matière de la deuxième portion 14 et s'étendent transversalement aux orifices 15, dans des ouvertures ménagées dans la paroi supérieure de la portion 14. Ces languettes prennent ici naissance chacune sur une paroi latérale de la deuxième portion 14. Ainsi, lors du montage des tubes 12g et 12h dans chacun des orifices 15 de la deuxième portion 14, chacune des languettes 29 est insérée dans la rainure 30 correspondante, comme illustré par la figure 8. Les languettes 29 et les rainures 30 permettent notamment de bloquer en translation la première portion 12 et la deuxième portion 14.

Une patte de liaison 18 peut avantageusement être prévue entre les deux tubes, de manière à garantir une bonne orientation des deux tubes, formant ainsi un système d'anti-rotation à l'égard de ces tubes.

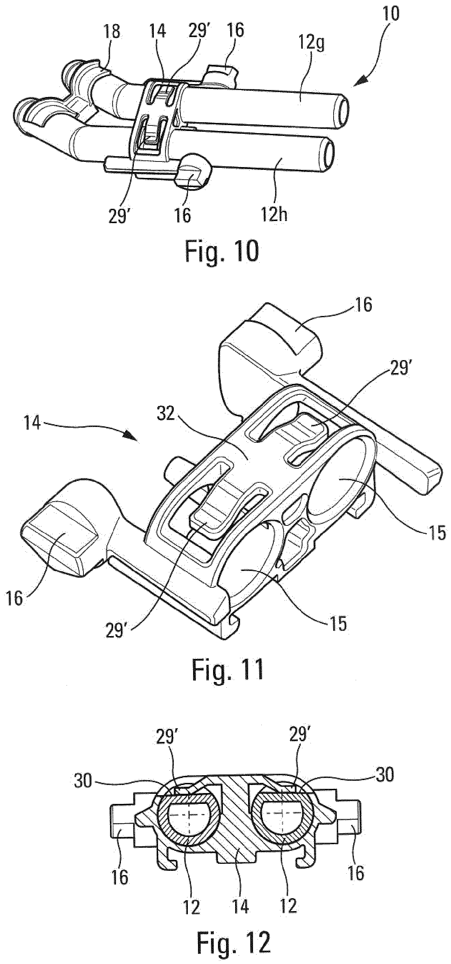

Dans une quatrième forme de réalisation illustrée par les figures 10 à 12, la portion métallique 12 comprend deux tubes 12g et 12h comprenant chacun une rainure 30. La deuxième portion 14 comprend ici un seul élément comportant deux languettes 29' agencées pour s'insérer dans les rainures 30, un tel agencement résultant d'une flexibilité des languettes 29'. Ces dernières sont issues de matière de la deuxième portion 14 et s'étendent transversalement aux orifices 15, dans des ouvertures ménagées dans la paroi supérieure de la portion 14. Ces languettes prennent chacune naissance sur une partie centrale 32 de la paroi supérieure de la deuxième portion 14 comme illustrée à la figure 11. Ainsi, lors du montage des tubes 12g et 12h dans chacun des orifices 15 de la deuxième portion 14, chacune des languettes 29' s'insère dans la rainure 30 correspondante, comme illustré par les figure 10 et 12. Les languettes 29' et les rainures 30 permettent notamment de bloquer en translation la première portion 12 et la deuxième portion 14.

Bien entendu, la présence de la patte de liaison n'est pas dépendante du matériau constitutif de la première portion 12 apte à canaliser le liquide ou du matériau constitutif de la deuxième portion 14 apte à solidariser l'interface hydraulique 10 sur le connecteur 1.

Ainsi, l'invention concerne également une interface hydraulique apte à être installée entre un tuyau d'alimentation 5 en liquide et un connecteur 1 d'un dispositif d'essuyage d'une vitre d'un véhicule, comprenant une première portion 12 apte à canaliser le liquide, se présentant sous la forme d'un moyen de raccordement hydraulique, et une deuxième portion 14 apte à solidariser l'interface hydraulique 10 sur le connecteur 1, dans laquelle le moyen de raccordement 12 comprend au moins deux conduits d'acheminement du liquide de lavage reliés par une patte de liaison 18. Avantageusement, cette patte de liaison peut être localisée entre une extrémité des conduits apte à recevoir le tuyau d'alimentation 5 et la deuxième portion 14.

## Revendications

1. Interface hydraulique apte à être installée entre un tuyau d'alimentation (5) en liquide et un connecteur (1) d'un dispositif d'essuyage d'une vitre d'un véhicule, comprenant une première portion (12) apte à canaliser le liquide et une deuxième portion (14) apte à solidariser l'interface hydraulique (10) sur le connecteur (1), **caractérisée en ce que** la première portion (12) est réalisée en un matériau métallique alors que la deuxième portion (14) est réalisée en un matériau plastique.

2. Interface selon la revendication 1, dans laquelle la portion métallique (12) est réalisée en alliage d'aluminium, en cuivre ou en acier inoxydable.

3. Interface selon l'une quelconque des revendications précédentes, dans laquelle la portion métallique se présente sous la forme d'un moyen de raccordement (12) hydraulique.

4. Interface selon la revendication 3, dans laquelle le moyen de raccordement (12) comprend au moins deux tubes (12e, 12f ; 12g, 12h) délimitant chacun un conduit d'acheminement du liquide de lavage, unitaire entre une première extrémité du moyen de raccordement et une deuxième extrémité dudit moyen de raccordement.

5. Interface selon la revendication 3, dans laquelle le moyen de raccordement (12) comprend quatre tubes (12a, 12b, 12c, 12d) emmanchés deux à deux et délimitant deux à deux un conduit d'acheminement du liquide de lavage.

6. Interface selon l'une des revendications 3 à 5, dans laquelle le moyen de raccordement (12) comprend un coude.

7. Interface selon l'une des revendications 4 à 6, comprenant en outre une patte de liaison (18) montée entre deux tubes, avantageusement localisé entre une extrémité des tubes apte à recevoir le tuyau d'alimentation (5) et la deuxième portion (14).

8. Interface selon l'une quelconque des revendications précédentes, dans laquelle la deuxième portion (14) est en matériau polymérique synthétique.

9. Interface selon l'une quelconque des revendications précédentes 4 à 8, dans laquelle au moins un tube (12) comprend des moyens de blocage en translation de la première portion (12) vis-à-vis de la deuxième portion (14).

10. Interface selon la revendication 9, dans laquelle au moins un tube (12a, 12b, 12c, 12d) comprend une nervure (13) apte à former une butée à l'encontre de la deuxième portion (14).

11. Interface selon la revendication 9, dans laquelle au moins un tube (12e, 12f) comprend une bague (24).

12. Interface selon la revendication 11, dans laquelle la deuxième portion (14) comprend au moins une gorge (28a, 28b, 29a, 29b) agencée pour recevoir la bague (24).

13. Interface selon la revendication 9, dans laquelle au moins un tube (12g, 12h) comprend au moins une rainure (30).

14. Interface selon la revendication 13, dans laquelle la deuxième portion (14) comprend au moins une languette (29, 29') agencée pour se loger dans la rainure (30).

15. Dispositif d'essuyage de vitre pour un véhicule automobile comprenant au moins un bras mobile agencé pour être monté sur le véhicule et effectuer un mouvement de va-et-vient angulaire, un connecteur (1) monté sur ledit bras mobile, une interface hydraulique (10) selon l'une des revendications 1 à 14, un tuyau d'alimentation (5) en liquide de lavage monté sur ledit connecteur (1) par ladite interface hydraulique (10), et au moins un fil chauffant, dispositif **caractérisé en ce que** le fil chauffant est en contact avec la première portion (12) de l'interface hydraulique (10) de sorte à autoriser une transmission de chaleur du fil au liquide de lavage canalisé par la première portion.

## Patentansprüche

1. Hydraulische Schnittstelle zur Installation zwischen einem Flüssigkeitszufuhrschlauch (5) und einem Verbinder (1) einer Scheibenwischvorrichtung eines Fahrzeugs, die einen ersten Abschnitt (12), der zur Leitung der Flüssigkeit in der Lage ist, und einen zweiten Abschnitt (14), der zur festen Verbindung der hydraulischen Schnittstelle (10) an dem Verbinder (1) in der Lage ist, umfasst, **dadurch gekennzeichnet, dass** der erste Abschnitt (12) aus einem metallischen Material hergestellt ist, wohingegen der zweite Abschnitt (14) aus einem Kunststoffmaterial hergestellt ist.

2. Schnittstelle nach Anspruch 1, wobei der metallische Abschnitt (12) aus einer Aluminiumlegierung, aus Kupfer oder aus rostfreiem Stahl hergestellt ist.

3. Schnittstelle nach einem der vorhergehenden Ansprüche, wobei der metallische Abschnitt in Form eines hydraulischen Verbindungsmittels (12) vorliegt.

4. Schnittstelle nach Anspruch 3, wobei das Verbindungsmittel (12) mindestens zwei Rohre (12e, 12f; 12g, 12h) umfasst, die jeweils eine Reinigungsflüssigkeitsförderleitung einheitlich zwischen einem ersten Ende des Verbindungsmittels und einem zweiten Ende des Verbindungsmittels begrenzen.

5. Schnittstelle nach Anspruch 3, wobei das Verbindungsmittel (12) vier Rohre (12a, 12b, 12c, 12d) umfasst, die paarweise verbunden sind und paarweise eine Reinigungsflüssigkeitsförderleitung begrenzen.

6. Schnittstelle nach einem der Ansprüche 3-5, wobei das Verbindungsmittel (12) ein Kniestück umfasst.

7. Schnittstelle nach einem der Ansprüche 4-6, die des Weiteren eine Verbindungslasche (18) umfasst, die zwischen zwei Rohren befestigt ist und vorteilhafterweise zwischen einem Ende der Rohre, das zur Aufnahme des Zufuhrschlauches (5) in der Lage ist, und dem zweiten Abschnitt (14) positioniert ist.

8. Schnittstelle nach einem der vorhergehenden Ansprüche, wobei der zweite Abschnitt (14) aus einem synthetischen Polymermaterial ist.

9. Schnittstelle nach einem der vorhergehenden Ansprüche 4-8, wobei mindestens ein Rohr (12) Mittel zum Sperren durch Verschieben des ersten Abschnitts (12) bezüglich des zweiten Abschnitts (14) umfasst.

10. Schnittstelle nach Anspruch 9, wobei mindestens ein Rohr (12a, 12b, 12c, 12d) eine Rippe (13) umfasst, die einen Anschlag gegenüber dem zweiten Abschnitt (14) bilden kann.

11. Schnittstelle nach Anspruch 9, wobei mindestens ein Rohr (12e, 12f) einen Ring (24) umfasst.

12. Schnittstelle nach Anspruch 11, wobei der zweite Abschnitt (14) mindestens eine Auskehlung (28a, 28b, 29a, 29b) umfasst, die zur Aufnahme des Rings (24) angeordnet ist.

13. Schnittstelle nach Anspruch 9, wobei mindestens ein Rohr (12g, 12h) mindestens eine Nut (30) umfasst.

14. Schnittstelle nach Anspruch 13, wobei der zweite Abschnitt (14) mindestens eine Zunge (29, 29') umfasst, die dahingehend angeordnet ist, sich in der Nut (30) einzulagern.

15. Scheibenwischvorrichtung für ein Kraftfahrzeug, die mindestens einen beweglichen Arm, der dazu angeordnet ist, an dem Fahrzeug befestigt zu werden und eine winkelförmige Hin- und Herbewegung zu bewirken, einen Verbinder (1), der an dem beweglichen Arm befestigt ist, eine hydraulische Schnittstelle (10) nach einem der Ansprüche 1-14, einen Reinigungsflüssigkeitszufuhrschlauch (5), der durch die hydraulische Schnittstelle (10) an dem Verbinder (1) befestigt ist, und mindestens einen Heizdraht umfasst, wobei die Vorrichtung **dadurch gekennzeichnet ist, dass** der Heizdraht derart mit dem ersten Abschnitt (12) der hydraulischen Schnittstelle (10) in Kontakt steht, eine Wärmeübertragung des Drahts auf die durch den ersten Abschnitt geleitete Reinigungsflüssigkeit zu gestatten.

## Claims

1. Hydraulic interface that can be installed between a liquid feed pipe (5) and a connector (1) of a device for wiping a window of a vehicle, comprising a first portion (12) capable of channelling the liquid and a second portion (14) capable of securing the hydraulic interface (10) on the connector (1), **characterized in that** the first portion (12) is produced in a metal material whereas the second portion (14) is produced in a plastic material.

2. Interface according to Claim 1, in which the metal portion (12) is produced in aluminium alloy, in copper or in stainless steel.

3. Interface according to either one of the preceding claims, in which the metal portion takes the form of a hydraulic coupling means (12).

4. Interface according to Claim 3, in which the coupling means (12) comprises at least two tubes (12e, 12f; 12g, 12h) each delimiting a washing liquid feed duct, unitary between a first end of the coupling means and a second end of said coupling means.

5. Interface according to Claim 3, in which the coupling means (12) comprises four tubes (12a, 12b, 12c, 12d) fitted together in pairs and in pairs delimiting a washing liquid feed duct.

6. Interface according to one of Claims 3 to 5, in which the coupling means (12) comprises a bend.

7. Interface according to one of Claims 4 to 6, further comprising a link tab (18) mounted between two tubes, advantageously located between an end of the tubes capable of receiving the feed pipe (5) and the second portion (14).

8. Interface according to any one of the preceding claims, in which the second portion (14) is of synthetic polymer material.

9. Interface according to any one of the preceding Claims 4 to 8, in which at least one tube (12) comprises means for blocking the translation of the first portion (12) with respect to the second portion (14).

10. Interface according to Claim 9, in which at least one tube (12a, 12b, 12c, 12d) comprises a rib (13) capable of forming an abutment against the second portion (14).

11. Interface according to Claim 9, in which at least one tube (12e, 12f) comprises a ring (24).

12. Interface according to Claim 11, in which the second portion (14) comprises at least one recess (28a, 28b, 29a, 29b) arranged to receive the ring (24) .

13. Interface according to Claim 9, in which at least one tube (12g, 12h) comprises at least one groove (30) .

14. Interface according to Claim 13, in which the second portion (14) comprises at least one tongue (29, 29') arranged to be housed in the groove (30) .

15. Window wiping device for a motor vehicle comprising at least one mobile arm arranged to be mounted on the vehicle and perform an angular reciprocating movement, a connector (1) mounted on said mobile arm, a hydraulic interface (10) according to one of Claims 1 to 14, a washing liquid feed pipe (5) mounted on said connector (1) by said hydraulic interface (10), and at least one heating wire, the device being **characterized in that** the heating wire is in contact with the first portion (12) of the hydraulic interface (10) so as to allow a transmission of heat from the wire to the washing liquid channelled by the first portion.
